# EUROPEAN PATENT SPECIFICATION

(11) **EP 2 984 143 B1**
(45) Date of publication and mention of the grant of the patent: **26.02.2020**
(21) Application number: 14717517.8
(22) Date of filing: 08.04.2014
(51) Int. Cl.: C09D 195/00, B02C 13/18, C09J 195/00, C08L 95/00

(54) **MASTIC COMPOSITION FOR ASPHALT MIXTURES AND PROCESS FOR MAKING SUCH A MASTIC COMPOSITION**
MASTIXZUSAMMENSETZUNG FÜR ASPHALTMISCHUNGEN UND VERFAHREN ZUR HERSTELLUNG SOLCH EINER MASTIXZUSAMMENSETZUNG
COMPOSITION DE MASTIC POUR DES MÉLANGES D'ASPHALTE ET PROCÉDÉ DE FABRICATION D'UNE TELLE COMPOSITION DE MASTIC

(30) Priority: 08.04.2013 NL 2010586
(43) Date of publication of application: 17.02.2016
(73) Proprietor: Koninklijke BAM Groep N.V., 3981 AZ Bunnik (NL)
(72) Inventor: HUURMAN, Marinus, NL-3526 KV Utrecht (NL); JACOBS, Mathias M.J., NL-3526 KV Utrecht (NL); DEMMINK, Ernst W., NL-3526 KV Utrecht (NL); VAN DEN BEEMT, Cornelis M.A., NL-3526 KV Utrecht (NL)
(74) Representative: EP&C
(86) International application number: PCT/NL2014/050224
(87) International publication number: WO 2014/168477

(56) References cited:
- EP-A1- 0 182 937
- WO-A1-89/03914
- WO-A1-96/26319
- GB-A- 697 237
- US-A- 2 917 395
- "Studies in Ancient Technology ED - Forbes; Robert J", 1 January 1993 (1993-01-01), STUDIES IN ANCIENT TECHNOLOGY (THIRD EDITION), E.J. BRILL, PAGE(S) 1 - 124, XP007922201, ISBN: 90-04-00621-4 the whole document
- J. CONNAN: "Use and trade of bitumen in antiquity and prehistory: molecular archaeology reveals secrets of past civilizations", PHILOSOPHICAL TRANSACTIONS OF THE ROYAL SOCIETY B: BIOLOGICAL SCIENCES, vol. 354, no. 1379, 29 January 1999 (1999-01-29), pages 33-50, XP055018182, ISSN: 0962-8436, DOI: 10.1098/rstb.1999.0358
- DAVID HOLLANDER ET AL: "Annealing, distilling, reheating and recycling : bitumen processing in the Ancient Near East", PALÉORIENT, vol. 26, no. 2, 1 January 2000 (2000-01-01), pages 83-91, XP055074667, ISSN: 0153-9345, DOI: 10.3406/paleo.2000.4712
- Julien Buisson ET AL: "The Mastic Asphalt Industry - A Global Perspective The Mastic Asphalt Industry - A Global Perspective", , 1 November 2010 (2010-11-01), pages 1-29, XP055117933, Retrieved from the Internet: URL:http://www.mastic-asphalt.eu/fileadmin /user_upload/pdf/Health___Safety/EMAA_glob al_perspective_mastic_asphalt.pdf [retrieved on 2014-05-14]
- Egbert Beuving: "Reuse and recycling of asphalt", , 21 June 2010 (2010-06-21), pages 1-40, XP055079067, Retrieved from the Internet: URL:http://www.eu-smr.eu/cdw/docs/Egbert Beuving - Recycling of Asphalt - 21062010.pdf [retrieved on 2013-09-13]
- Annonymous: "Arguments to stimulate the government to promote asphalt reuse and recycling", , 21 May 2008 (2008-05-21), pages 1-14, XP055079092, Retrieved from the Internet: URL:http://www.eapa.org/usr_img/position_p aper/arguments_stimulate_asphalt_May2008.p df [retrieved on 2013-09-13]
- Eddie Johnson: "MnROAD Study of RAP and Fractionated RAP", , 1 December 2012 (2012-12-01), XP055118151, Retrieved from the Internet: URL:http://www.lrrb.org/media/reports/2012 39.pdf [retrieved on 2014-05-15]
- Amir F. Basida: "Structural Response of Foamed-Asphalt-Sand Mixtures in Hot Enviroments", Transportation Research Record 1115, 1 January 1987 (1987-01-01), pages 134-149, XP055133070, Retrieved from the Internet: URL:http://asphalt.csir.co.za/FArefs/Bissa da.pdf [retrieved on 2014-08-04]
- D Y Lee ET AL: "TREATING IOWA'S MARGINAL AGGREGATES AND SOILS BY FOAMIX PROCESS", , 1 May 1980 (1980-05-01), pages 1-88, XP055133255, Retrieved from the Internet: URL:http://publications.iowa.gov/17337/1/I ADOT_hr212_Trtng_IA_Marg_Agg_Soils_Foamix_ Pro_1980.pdf [retrieved on 2014-08-05]
- Pencheng Fu: "Investigation of the Curing Mechanism of Foamed Asphalt Mixes Based on Micromechanics Principles", JOURNAL OF MATERIALS IN CIVIL ENGINEERING, vol. 22, no. 1 1 January 2010 (2010-01-01), pages 29-38, XP009179506, ISSN: 0899-1561, DOI: 10.1061/(ASCE)MT.1943-5533.0000009 Retrieved from the Internet: URL:http://
- K M Muthen: "Foamed Asphalt Mixes, Mix Design Procedure", , 1 June 1999 (1999-06-01), XP055014276, Pretoria, South Africa Retrieved from the Internet: URL:http://asphalt.csir.co.za/FArefs/Muthe n - Mix Design.pdf [retrieved on 2011-12-08]
- John Rebbechi: "Stone Mastic Asphalt, Design & Application Guide, Implementation guide No. 4", , 1 January 2000 (2000-01-01), pages 1-27, XP055133168, Retrieved from the Internet: URL:http://www.aapa.asn.au/cms_files/AAPA IG-4 Stone Mastic Asphalt OCR.pdf [retrieved on 2014-08-05]
- I Carswell ET AL: "Feasibility of recycling surfacing materials back into thin surfacing systems", Proc. Int. Conf: Sustainable construction materials and technologies, 11-13 June 2007 Coventry, Special papers proceedings., Pub. UW Milwaukee CBU, , p337-343., 13 June 2007 (2007-06-13), pages 337-343, XP055133174, Retrieved from the Internet: URL:http://www.claisse.info/special papers/carswell_full_text.pdf [retrieved on 2014-08-05]
- Anonymous: "Best practice guideline for warm mix asphalt, Manual 32", , 1 September 2011 (2011-09-01), pages 1-127, XP055133618, Retrieved from the Internet: URL:http://www.aapaq.org/q/2011st/docs/Man ual32.pdf [retrieved on 2014-08-06]
- Anonymous: "Warm Mix Asphalt Technology", , 24 October 2003 (2003-10-24), pages 1-44, XP055133624, Retrieved from the Internet: URL:http://www.superpave.psu.edu/downloads /pdf/13 Newcommb WMA NE.pdf [retrieved on 2014-08-06]
- Chui-Te Chiu ET AL: "A STUDY ON PROPERTIES OF FOAMED ASPHALT TREATED MIXES", , 30 July 2002 (2002-07-30), pages 1-21, XP055014274, Retrieved from the Internet: URL:http://www.ltrc.lsu.edu/TRB_82/TRB2003 -000747.pdf [retrieved on 2011-12-08]
- JENKINS K J: "Mix design considerations for cold and half-warm bituminous mixes with emphasis on foamed bitumen", DISSERTATION SUBMITTED TO THE DEPARTMENT OF CIVIL ENGINEERING, FACULTY OF ENGINEERING, UNIVERSITY OF STELLENBOSCH IN FULFILLMENT FOR THE DEGREE OF DOCTOR OF PHILOSOPHY (ENGINEERING), , 1 September 2000 (2000-09-01), pages I-XVII,1, XP008125845, Retrieved from the Internet: URL:http://www.tudelft.nl/live/ServeBinary ?id=f3ab4a9e-2345-4fe9-874f-0e92b59eb89b&b inary=/doc/Jerkins+-+Complete+PhD+Jenkins. pdf
- F. Olard ET AL: "LOW EMISSION & LOW ENERGY ASPHALTS FOR SUSTAINABLE ROAD CONSTRUCTION: THE EUROPEAN EXPERIENCE OF LEA PROCESS", , 1 January 2011 (2011-01-01), pages 1-10, XP055078773, Retrieved from the Internet: URL:http://www.aapaq.org/q/2011st/CAPSA201 1/FA1_05_107_1111.pdf [retrieved on 2013-09-11]

## Description

The present invention relates to a mastic composition for asphalt mixtures and a process for making such a mastic composition. More in particular the invention relates to a mastic composition which comprises reclaimed asphalt aggregates that originates from reclaimed asphalt mixtures.

In this specification by asphalt is understood the combination of bitumen and aggregates. The aggregates are granular and have a variety of sizes, and thus a variety of diameters. The aggregates may be subdivided in at least three groups; one group with a diameter of at least 2 mm; one with a diameter ranging from at most 2 mm to 63 µm and a third group having granular particles with a diameter of at most 63 µm. The finer filling material, e.g. having a maximum diameter of 63 µm, may be defined as a formally dosed artificial fines or as a separate form of aggregate. Asphalt contains aggregates from all three groups.

Asphalt is generally used in road pavements and similar other applications. There is an increasing need for road pavements based on asphalt mixtures. The aggregates are mixed together with the bitumen, spread and compacted, usually while being hot, to form a road pavement.

Mastic compositions also comprise bitumen and aggregates. However, a mastic composition differs from asphalt in that it contains only aggregates from the second and third group, i.e. it contains aggregates with a diameter of at most 2 mm. It is used in the preparation of road pavements, but it is also used as binder for pebbles and small sized rocks, and as sealant.

Roads tend to age and when aged roads are being renewed, large quantities of reclaimed asphalt become available. From an environmental standpoint it is undesirable to dump the reclaimed asphalt as waste. Therefore, there is an increasing requirement to recycle reclaimed asphalt.

Julien Buisson et al., "The Mastic Asphalt Industry - A Global Perspective", November 2010, has disclosed that there is a tendency to increasingly use reclaimed mastic asphalt (MA) in the production of mastic asphalt (= recycling). Mastic asphalt is a dense mixture consisting of coarse aggregate, and/or sand, and/or limestone fine aggregate, and/or filler and bitumen, which may contain additives. Asphalt mastic (AM) is a term used in Europe to describe a mix of sand (that is, without aggregates > 2 mm), and/or limestone fine aggregate, and/or filler and bitumen that is used specially for waterproofing in a variety of applications.

EP0182937A1 discloses a so called remix process for preparing a castable asphalt, concurrently using reclaimed material of e.g. comminuted asphalt and fresh asphalt materials. In this process the quantity and quality of the bitumen in the reclaimed material (before or after crushing) are determined. The reclaimed asphalt is reduced to a particle size between 0.2 and 100 mm, in particular 10 - 40. The amounts of fresh materials (aggregate, sand, filler and fresh bitumen) to be added are calculated on basis of the data of the reclaimed asphalt. The comminuted reclaimed asphalt (20 - 80 wt%) and fresh materials are mixed under specific conditions such that the result is a castable asphalt composition having a bitumen content in the range of 6.5 - 8 %, a penetration of at most 70 and a softening point of max. 60.

From WO89/03914A1 a heated mixer-conveyor for recycling broken road asphalt is known..

J. Rebbechi, "Stone Mastic Asphalt, Design & Application Guide. Implementation Guide No. 4", 2000, discloses among others an approach for preparing Stone Mastic Asphalt (SMA) as a wearing course depending on combining a single sized coarse aggregate fraction with a minus 5 mm quarry fraction, without any intermediate fractions (such as 10 mm or 7 mm in a 14 mm mix).

I. Carswell et al., Feasibility of recycling surfacing materials back into thin surfacing systems", discloses that if the proportion of reclaimed asphalt (RA) increases up to 30%, greater care needs to be taken on how to treat the residual binder present in the RA as a proportion of the "active" binder content in the recycled surface course layer.

In a conventional process the reclaimed asphalt is crushed to form reclaimed asphalt aggregates. The reclaimed asphalt aggregates also have a variety of dimensions. The reclaimed asphalt aggregates may then be fed to an asphalt manufacturing plant. The reuse of reclaimed asphalt usually takes place by either adding between 20 to 25 %wt of cold reclaimed asphalt aggregates to the normal fresh asphalt mixture, or by preheating the reclaimed asphalt aggregates and mix it with virgin aggregates and fresh bitumen to form a partially recycled asphalt mixture. In the latter case it is common to use up to about 50 %wt of reclaimed asphalt, based on the total asphalt composition.

It is clear that also the latter operation requires that large amounts of fresh bitumen and virgin aggregates should be available to produce the desired asphalt mixture. Further, it could also entail that, since only a portion of the reclaimed asphalt can be used, there is no use for another portion for which dumping or use as sub-base layer in a pavement are the only solutions. Such solutions are undesirable from an environmental standpoint. Moreover, since virgin aggregates and fresh bitumen are required in large proportions, it contributes to the exhaustion of natural resources and adds to the costs of the eventual asphalt mixture. Therefore there is a need to reuse a larger proportion of the reclaimed asphalt.

It has now surprisingly been found that a portion of the reclaimed asphalt aggregates can advantageously be used in the preparation of a mastic composition. As indicated above, by mastic composition is understood the combination of bitumen and small aggregates, i.e. with aggregates with a diameter of at most 2 mm. Dependent on the type of asphalt, a mastic composition serves as filling and binding material between the larger aggregates of the asphalt in question. Accordingly, the present invention provides a mastic composition consisting substantially of a bituminous binder material and granular asphalt aggregates with a diameter of at most 2 mm, wherein the granular asphalt aggregates consist for a proportion of at least 50 %wt, based on the weight of the aggregates, of reclaimed granular asphalt aggregates that have a diameter of at most 2 mm, wherein the reclaimed granular asphalt aggregates comprise recycle bitumen ranging from 6 to 25%wt, based on the weight of the reclaimed granular asphalt aggregates, and wherein the amount of bituminous binder material is at least 15%wt, based on the weight of the bituminous binder material and the granular asphalt aggregates. The mastic composition according to the present invention preferably has shear modulus G* of at most 2000 MPa, determined by Dynamic Shear Rheometry at -10 °C at a frequency of 1 Hz.

The mastic composition according to the present invention enables the use of an additional portion of the reclaimed asphalt aggregates. Not only the aggregates are reused, but also the bitumen that is adhered to the reclaimed aggregates, is in this way recycled to the mastic composition and can be reused in the manufacture of new asphalt mixtures. By ensuring that the mastic composition has a shear modulus of at most 2000 MPa at -10°C and a frequency of 1 Hz, the skilled person has a mastic composition at his disposal that can be re-used as binder in asphalt compositions with substantially the same specifications as freshly prepared mastic compositions.

In asphalt the aggregates are generally granular. A usual gradation distinguishes aggregates in coarse aggregates having a diameter of greater than 2 mm and fine aggregates which have a diameter of equal to or smaller than 2 mm. The aggregates are generally mineral material and may be composed of small sized rocks and pebbles, sand and finer dust of mineral material. Asphalt is generally composed of a matrix of aggregates that are bound by bitumen as binder and fine aggregates as filler. A mastic composition can be used as binder and filler for the more coarse rocks and pebbles since it contains both fine aggregates and bitumen. The particle sizes of aggregates are typically determined by sieves. Standard sieves have been mentioned in standard EN13043. In the present invention the diameters are determined by using the appropriate sieve in accordance with EN 13043. That means that the fine aggregates with a diameter of at most 2 mm correspond with the fraction that passes a 2 mm sieve. The more coarse fraction, i.e. particles with a diameter of more than 2 mm, is the fraction that does not pass the 2 mm sieve.

The mastic composition according to the invention can surprisingly be used as the binder and filler for road pavement applications. It has been found that a combination of fine reclaimed granular asphalt aggregates and bituminous binder material can be obtained that has similar properties to types of fresh mastic compositions. Therefore, the mastic composition according to the invention may be used as replacement for fresh mastic compositions. The physical and mechanical properties of the mastic composition are similar to those of fresh mastic compositions that are used as binder in road pavement. Such properties include the shear modulus, which can be measured using the procedure as mentioned in the paper of Huurman et al. in the Journal of the Association of Asphalt Paving Technologists, v(79), pp. 365-402, Sacramento CA, USA (2010). Suitably, the proportion of the reclaimed granular asphalt aggregates having a diameter of at most 2 mm is at least 90%wt, preferably at least 95%wt, based on the weight of the granular asphalt aggregates in the mastic composition. Advantageously, substantially all of the granular asphalt aggregates are reclaimed aggregates.

It has been found that the size of the reclaimed granular asphalt aggregates in the mastic composition has an influence on the handleability of the mastic composition. When the reclaimed asphalt aggregates have a diameter of 1 mm, the mastic composition according to the invention containing such aggregates, is excellently handleable whilst requiring less of fresh bitumen to be added to the mastic composition. Therefore, the reclaimed granular asphalt aggregates preferably have a diameter of 1 mm or less.

Such a good performance of the asphalt aggregates also influences the preferred amount of bitumen that is comprised in the mastic composition. The composition according to the invention comprises at least 15%wt of bitumen, based on the composition. The handling of the mastic composition becomes easiest when the amount of bituminous binder material is in the range of 25 to 75 %wt, preferably from 25 to 60%wt of the bituminous binder material. The handleability can be shown by the easiness with which the composition can be stirred at different temperatures. The lower the temperature to obtain a certain easiness of stirring, the better handleable the composition is.

The use of the reclaimed asphalt aggregates not only entails the recycle of the aggregate material. It has been found that fine reclaimed asphalt aggregates may also contain considerable amounts of bitumen. By recycling the reclaimed granular asphalt aggregates also this bitumen is re-used. In general road pavement comprises from 3 to 8 %wt of bitumen. When this road pavement is being recovered as reclaimed asphalt, one would expect that the various fractions would also contain a homogeneous content of bitumen, ranging from 3 to 8%wt, based on the whole fraction. It has been found that surprisingly the distribution of recycle bitumen over the fractions of reclaimed asphalt aggregates may be varied in such a way that the fine fraction or fractions comprise a higher content of bitumen than the coarse fraction or fractions. It has been found that especially when the reclaimed asphalt aggregates have been obtained by subjecting reclaimed asphalt to decomposition by means of impact, in particular in a centrifugal mill, and to subsequent sieving, fine aggregates are obtainable that have a significantly higher amount of recycle bitumen than the more coarse fraction. Without wishing to be bound by any theory, it would seem that in a centrifugal mill, the reclaimed asphalt is thrown against the side wall of the centrifugal mill or against other aggregates in such a way that larger parts of reclaimed asphalt disintegrates into the original aggregates, without significant breaking of the coarse aggregates that are present in the reclaimed asphalt. The smaller aggregates tend to hold on to more bitumen that the coarse aggregates. A suitable centrifugal mill has been described in EP1335794, which discloses a two chamber-comprising centrifugal mill. This mill will be described in more detail hereinbelow. The coarse aggregates that are obtained from such a mill comprise less recycle bitumen than the average of the reclaimed asphalt. The fine aggregates contain significantly more recycle bitumen than the average of the reclaimed asphalt. The bitumen content in the fine aggregates thus obtained comprises from 6 to 25%wt, preferably from 7 to 25%wt, more preferably from 9 to 25%wt, based on the combination of reclaimed fine aggregates and recycle bitumen.

When the fine aggregates have a maximum diameter of at most 2 mm, they can suitably be used in the mastic composition according to the invention. When the bitumen content is high, e.g. from 10 to 20%wt, only a small addition of fresh bitumen is required to obtain a composition according to the invention. The skilled person will realize that bitumen in asphalt compositions will develop an increased hardness due to ageing under the influence of light, ultraviolet radiation and oxygen. Therefore it may be convenient to modify the composition slightly. This may especially be the case when only a small amount of fresh bitumen is required. In such a case it may be advantageous to use a mastic composition that comprises a bituminous binder material that includes a rejuvenating agent. There is a myriad of products that are presently being used and marketed as rejuvenating agents for recycled road pavement. Such products are generally classified as rejuvenators, viscosity graded asphalt and a large variety of proprietary formulations. A potential rejuvenating agent is a shale oil modifier. Commonly used are crude oil fractions, preferably having a viscosity of at least 200 cSt at 60 °C, animal oils, vegetable oils and mixtures thereof. The use of relatively light crude oil fractions has an environmental drawback in that it evaporates and thus produces hydrocarbonaceous vapours that are undesirable from an environmental point of view. Therefore, the rejuvenating agent is preferably a vegetable oil, more preferably selected from soybean oil, sunflower oil, rapeseed oil, corn oil, peanut oil, olive oil, coconut oil, palm oil, palm kernel oil and mixtures thereof, more preferably palm oil or palm kernel oil. The use of such oils is more sustainable and also shows a low volatility and thus has an long-lasting effect on the bitumen.

The amount of rejuvenating agent in the mastic composition may vary within wide ranges. The most suitable amounts can be selected by the skilled person dependent on the hardness of the aged bitumen in the reclaimed asphalt, the properties of any fresh bitumen, optionally to be added, and on the intended use of the mastic composition. Typically the amount of rejuvenating agent may be in the range of 0.5 to 5.0 %wt, based on the weight of the bituminous binder material in the mastic composition.

The mastic composition according to the present invention is advantageously prepared in a special method. Accordingly, the present invention also provides a process for the preparation of a mastic composition, comprising
a) providing a solid material comprising reclaimed granular asphalt aggregates which have a maximum diameter of at most 2 mm, and recycle bitumen;
b) providing a fresh bitumen, preferably with a penetration between 40 and 220 dmm, and optionally a rejuvenation agent;
c) mixing the solid material with the fresh bitumen to obtain a mixture containing reclaimed granular asphalt aggregates and a bituminous binder material consisting of recycle bitumen and fresh bitumen and optionally the rejuvenating agent, which bituminous binder material preferably has a kinematic viscosity at the mixing temperature of at most 200 cSt; and
d) recovering the mixture as the mastic composition;
wherein the amount of bituminous binder material ranges from 15 to 75 %wt, calculated as recycle bitumen, fresh bitumen and optionally the rejuvenating agent, and based on the weight of the mastic composition.

It is possible to provide a rejuvenating agent only. The process then comprises step a) as described above, a step b') wherein only a rejuvenating agent is provided, a step c') wherein a mixture of reclaimed granular asphalt aggregates and a bituminous binder material consisting of recycle bitumen and the rejuvenating agent is prepared, and a step d') wherein this mixture is recovered as the mastic composition. Also in this process the amount of bituminous binder ranges from 15 to 75%wt, calculated as recycle bitumen and rejuvenating agent, and based on the weight of the mastic composition.

As indicated above, the reclaimed granular asphalt aggregates may suitably have a maximum diameter of at most 1 mm.

The solid material that is used in the present process includes reclaimed granular asphalt aggregates and recycle bitumen. The recycle bitumen is suitably the aged bitumen that is recovered together with the reclaimed asphalt aggregates. These aggregates may hold significant amounts of bitumen. Already explained above, the bitumen content in the fine fraction of reclaimed asphalt aggregates may be significantly higher than the average bitumen content in the reclaimed asphalt as a whole. The fraction of reclaimed granular asphalt aggregates that have a maximum diameter of at most 2 mm, has an amount of recycle bitumen in the range of 6 to 25 %wt, preferably from 7 to 25 %wt, more preferably from 9 to 25%wt, based on the combination of recycle bitumen and reclaimed granular asphalt aggregates. Therefore such fractions are suitably used as the solid material for the process of the present invention.

The solid material can suitably be recovered from a centrifugal mill as described above. A very suitable centrifugal mill has been described in EP 1335794. This mill comprises a twin-chamber rotor that is mounted in a centrifugal mill housing. Reclaimed asphalt in the form of blocks or lumps is fed into the rotor, accelerated and hurled to the outside. The lumps or blocks are thrown against a wall of the housing that serves as anvil. Alternatively, the solid material is thrown against a layer of particles that have been passed through the rotor before. By varying the rotor speed and by selecting the anvil or the layer of particles as impact surface for the reclaimed asphalt, the skilled person can determine the optimal decomposition strength for the reclaimed asphalt. In this way the skilled person is able to optimize the breaking up of the lumps or blocks of reclaimed asphalt into coarse and fine solid material, wherein the skilled person can minimize the breaking of the aggregates in the reclaimed asphalt. It has surprisingly been found that in this way the coarse aggregates, i.e. aggregates with a maximum diameter of more than 2 mm, have a significantly lower bitumen content than the fine aggregates, i.e. the aggregates having a maximum diameter of at most 2 mm. The fine aggregates that are obtained using this type of mill are excellently suitable for use in the process for the manufacture of the mastic composition according to the present invention.

The fine aggregates may be obtained from the centrifugal mill in combination with the more coarse aggregates. The fine aggregates may then suitably be recovered by subsequent sieving.

The fresh bitumen can be selected from a variety of bitumen types. Dependent on the hardness of the recycle bitumen that is contained in the solid material, the skilled person may opt for the selection of a rather soft bitumen, i.e. a bitumen with a high penetration. Suitable fresh bitumen types include those with a penetration up to 220 dmm, e.g. from 40 to 220 dmm, measured in accordance with EN 1426. The skilled person may also select a polymer modified bitumen. In such a case the bitumen has been modified by the addition of one or more polymers. Such polymers may be elastomers, such as styrene butadiene rubber, styrene butadiene block copolymers, linear or star-shaped; styrene isoprene block copolymers, linear or star-shaped, and EPDM rubber (ethylene propylene diene monomer polymer). Alternatively thermoplasts may be added, such as, polyvinylchloride, ethylene vinyl acetate; copolymers of ethylene and methyl or butylene (meth)acrylate, polyethylene or atactic polypropylene. The skilled person will ensure that when the fresh bitumen and the solid material, and optionally the rejuvenating agent are mixed, the kinematic viscosity at the mixing temperature will be suitably at most 200 cSt (200 mm²/s). This ensures that the mixing of the solid material and the fresh bitumen, and optionally the rejuvenating agent can be conducted smoothly, and that a homogeneous mixture is obtained. A convenient way to obtain this viscosity is by heating the fresh bitumen, and optionally the rejuvenating agent to a temperature of 130 to 200 °C. The nature of the rejuvenating agents and the suitable amounts of the addition of rejuvenating agent to the mixture are like those mentioned above. When heating is applied to the mixture to obtain the desired viscosity, the skilled person will adopt the equipment that is already available for the manufacture of asphalt mixes and mastic compositions.

The amount of fresh bitumen that is added in the process of the present invention may depend on the amount of recycle bitumen that is included in the solid material. The total amount of bitumen is at least 15%wt. Dependent on the amount of recycle bitumen and the use of the resulting mastic composition the total bitumen content of the mastic composition will be determined by the skilled person. By varying the amount of fresh bitumen, the nature of fresh bitumen, the optional addition of rejuvenating agent, and the application of the mastic composition, the skilled person may select the fresh bitumen to be added and the amount that is used in the process of the present invention. Typically the amount of fresh bitumen that is being added to the process in the present invention amounts from 0 to 70%wt, preferably from 5 to 25 %wt, based on the weight of the fresh bitumen and solid material. The amount of fresh bitumen is preferably selected such that the total bitumen content, calculated as recycle bitumen and fresh bitumen, ranges from 25 %wt to 75 %wt, based on the total of fresh bitumen and solid material.

The mastic composition according to the present invention may conveniently be used as binding agent in the manufacture of an asphalt mixture, e.g. for road pavement. For example, a mastic composition according to the invention consisting of a bituminous binder material and asphalt aggregates with a diameter of at most 2 mm, of which at least 50%wt are reclaimed asphalt aggregates, is prepared. The mastic composition thus obtained can be heated and dosed directly into the mixer of an asphalt plant as a fluid. Therein it is mixed with aggregates of the desired sizes and, optionally, with additional bituminous binder material to obtain an asphalt composition with the desired specifications. Another option is to use it directly on a road pavement by applying, spreading or floating. Since it is has no voids, it may be applied in liquid form onto a matrix of coarse aggregates and provide an asphalt surface. Optionally, the surface may be toughened by the application of chips, i.e. sand or coarse aggregates. If a coloured pavement is desired, the sand or coarse aggregates may be selected from natural coloured aggregates. After cooling, the applied mastic composition can be walked or driven on. Mastic may also be applied for creating waterproof surfaces, and may even be applied underwater, as is known to the person skilled in the art.

When the mastic composition according to the present invention is directly dosed into the mixer of an asphalt plant, the mastic composition tends to be heated to relatively high temperatures, such as 160 to 200 °C. The present invention also enables the skilled person to prepare a mastic composition that is suitable for preparing an asphalt that may be prepared at lower temperatures. Thereto, the invention provides a process for the manufacture of an asphalt composition, comprising a mastic composition according to the present invention and coarse aggregates, in which process
the mastic composition according to the present invention is provided;
the mastic composition is heated to an elevated temperature and the thus heated mastic composition is passed to an expansion chamber;
water is passed to the expansion chamber to contact the heated mastic composition to form steam, thereby forming a foamed mastic composition; and
the foamed mastic composition is combined with the coarse aggregates, yielding an asphalt composition.

The mastic composition is heated to an elevated temperature. The temperature is selected such that at the prevailing conditions water will evaporate to form steam and thus cause the foaming of the bituminous binder in the mastic composition. Whereas the process is suitably carried out at ambient pressure, the temperature of the mastic composition is suitably above the standard boiling point of water. Preferably, the mastic composition is heated to a temperature in the range of 125 to 230 °C, preferably from 150 to 190 °C. The mastic composition is passed to the expansion chamber at a pressure that is suitably in the range of 2 to 10, preferably from 3 to 7 bar.

Although it is possible to heat the water also, it is most cost effective to pass the water to the expansion chamber at ambient temperature, i.e. typically in the range of 4 to 25°C. The amount of water that is passed to the expansion chamber is suitably such that foaming of the bituminous binder material will be accomplished whereas the remaining amount of water in the foamed bitumen does not get too high. Suitably, the amount of water is in the range of 1 to 10%wt , more preferably from 2 to 4%wt, based on the combination of mastic composition and water. These amounts allow for a substantially complete evaporation, thereby creating a foam and at the same time avoiding the presence of remaining liquid water. The water may suitably comprise a foaming additive.

The foamed mastic composition is preferably combined with the coarse aggregates by means of injection nozzles. By means of such nozzles the mastic composition is divided into small droplets that intensely mix with the coarse aggregates. The foamed bituminous binder material in the foamed mastic composition may collapse. Due to the rate with which the foamed mastic composition is combined with the coarse aggregates the intense mixing is suitably obtained before the foamed bituminous binder material collapses.

The foamed mastic composition typically has a half-life of at least 2 seconds, preferably of at least 4 seconds. The expansion factor in the expansion chamber is suitably at least 3, preferably at least 4, and typically at most 10. By expansion factor is understood the quotient of volume of the foamed mastic composition divided by the volume of the mastic composition before introduction into the expansion chamber.

The coarse aggregates comprises aggregates with a particle size of ≥ 2 mm. Such aggregates may suitably be heated to a temperature in the range of 100 to 180 °C. This will allow an easy mixing process when it is brought into contact with the foamed mastic composition, which may have a temperature in the range of 60 to 160 °C, preferably from 75 to 140 °C. Moreover, this will ensure that the aggregates will be essentially dry so that no additional water is present in the foamed bituminous binder material.

The foamed mastic composition may be combined with further aggregates having a particle size of 2 mm or smaller, in addition the combining with the coarse aggregates. These aggregates may also be heated, e.g. to the same temperatures as the coarse aggregates. However, aggregates with a particle size of less than 2 mm have suitably an ambient temperature when they are combined with the foamed mastic composition.

The amount of aggregates with a particle size of 63 µm to 2 mm, may be small since the majority of the desired fraction is provided by the mastic composition itself. The coarse aggregates and additional aggregates with a particle size of at most 2 mm, if any, may be obtained from reclaimed asphalt. However, it is also possible to use fresh aggregates. When reclaimed aggregates are used, the proportion of recycled material may well exceed 75% of the eventual asphalt composition.

The method of making a foamed bitumen and an apparatus for preparing such foamed bitumen are known in the art. An example of such method and apparatus is provided by US 8206499.The invention enables the obtaining of reclaimed granular asphalt aggregates that contain a remarkably high content of recycle bitumen. Accordingly, the present invention provides solid material comprising reclaimed granular asphalt aggregates, which have a maximum diameter of at most 2 mm, and recycle bitumen, and wherein the amount of recycle bitumen in the solid material ranges from 6 to 25 %wt, preferably 7 to 25%wt, more preferably from 9 to 25%wt, based on the weight of the solid material. The solid material is different from sand and other virgin mineral aggregates in that it comprises a high content of bitumen. It is also different from a mixture of fine aggregates and bitumen, in that the bitumen is aged bitumen which has an increased hardness due to the exposure of the asphalt layer from which it originates, to sun light, uv radiation and/or oxygen. Moreover, the aggregate material tends to stem from a variety of geological resources, which is different from a combination of fresh bitumen and fresh aggregates. In the latter situation the fresh aggregates are usually from one geological source.

### EXAMPLE 1

Reclaimed asphalt lumps were subjected to impact decomposition in a centrifugal mill as described in EP 1335794. The bitumen content of the asphalt lumps was about 4,5%wt, based on the total lumps. The decomposed aggregates were sieved over conventional sieves and separated into a fraction 0-2 mm, a fraction 0-1 mm and a fraction with a maximum diameter of more than 2 mm. The 0-2 mm fraction and the 0-1 mm fraction contained about 12 %wt recycle bitumen. The recycle bitumen had a penetration of about 18 dmm (according to EN 1426). A fresh bitumen was provided. To the bitumen the 0-2 mm fraction or the 0-1 mm fraction, respectively, was added. The admixture obtained was mixed with a rejuvenating agent. The amount of rejuvenating agent was 2.37 %wt, based on recycle bitumen. The amount of fresh bitumen was as indicated in the Table 1 below. The mixture was heated to 175 °C, and thoroughly mixed. It was determined how easy the stirring and handleability was. When the mixture was handleable, pumpable and foamable the composition got the qualification "+". If not, the composition was "-".

After cooling a mastic composition was obtained.

**Table 1**

| Fraction (mm) | Aggregates from reclaimed mastic (%wt) | Recycle bitumen (%wt) | Fresh bitumen (%wt) | Added rejuvenating agent(%wt) | Total mixed bitumen (%wt) | Handle ability score |
|---|---|---|---|---|---|---|
| 0-2 | 62,33 | 8,50 | 28,97 | 0,20 | 37,67 | + |
| 0-2 | 73,22 | 9,98 | 16,56 | 0,24 | 26,78 | + |
| 0-1 | 66,78 | 9,11 | 23,90 | 0,22 | 33.22 | + |
| 0-1 | 75,94 | 10,36 | 13,46 | 0,25 | 24.06 | + |

From the results it is apparent that when the mastic composition comprises the solid material with reclaimed granular asphalt aggregates, fresh bitumen and rejuvenating agent and the bitumen content is higher than 20 %wt of mixed bitumen, a pumpable, stirrable and doseable mastic composition is obtained at 175 °C.

### EXAMPLE 2

A mastic composition was obtained by decomposition of an aged porous Dutch asphalt by means of a centrifugal mill. The reclaimed mastic composition consisted of 72.2% wt of reclaimed aggregates with a maximum particle size of 2 mm and 27.8 %wt of recycle bitumen. The shear modulus, G*, of the mastic composition (indicated in Table 2 as "untreated") was determined in a Dynamic Shear Rheometer (DSR) using the method as described in Journal of the Association of Asphalt Paving Technologists, v(79), pp. 365-402, Sacramento CA, USA (2010) at different frequencies. DSR tests have been done on column specimen of 20 mm height and with a diameter of 6 mm at frequencies of 10⁻⁶ to 100 Hz at a temperatures of -10 °C in a torque controlled mode. In the response tests the specimens are subjected to oscillatory torque while measuring both the shear modulus and phase lag (δ). The results are shown in Table 2.

In a second set of tests the mastic composition consisted of the aggregates and recycle bitumen of the untreated specimens and also 2.45 %wt of a rejuvenating agent, comprising bitumen and a biobased agent, called Modiseal®ZX, produced by Latexfalt. The mastic composition consequently consisted of 70.5 %wt of reclaimed aggregates and 29.5 %wt of bituminous binder consisting of recycle bitumen and Modiseal®ZX The shear modulus and phase lag (δ) of the obtained mastic composition (indicated as "treated") were determined in an identical way as for the untreated specimens.

**Table 2**

| | Shear modulus, G* | | | Phase lag, δ | | |
|---|---|---|---|---|---|---|
| frequency [Hz] | untreated [MPa] | treated [MPa] | reduction [MPa] | untreated [degr.] | treated [degr.] | Increase [degr.] |
| 0.00001 | 221 | 155 | 29.6% | 29.5 | 34.0 | 4.5 |
| 0.0001 | 425 | 329 | 22.7% | 22.9 | 25.9 | 3.0 |
| 0.001 | 713 | 588 | 17.6% | 18.3 | 20.6 | 2.3 |
| 0.01 | 1086 | 942 | 13.2% | 15.0 | 16.7 | 1.7 |
| 0.1 | 1534 | 1383 | 9.9% | 12.2 | 13.4 | 1.2 |
| 1 | 2022 | 1863 | 7.8% | 9.5 | 10.1 | 0.6 |
| 10 | 2494 | 2314 | 7.2% | 7.0 | 7.1 | 0.1 |

Column 2 presents the complex shear modulus for the untreated mastic composition. In column 3 similar data after incorporation of a rejuvenating agent are presented. In column 4 the obtained reduction of G* is shown.

Similarly, columns 5 and 6 present the phase lag, δ, of the untreated and treated mastic composition, respectively. Finally, in column 7 the obtained gain in phase lag is presented.

From Table 2 it is concluded that the addition of a rejuvenating agent acts to revitalise the mastic composition of an aged asphalt. Especially at low frequencies a clear and significant change in behaviour is obtained. The mastic composition according to the invention now becomes much softer as indicated by the reduction of G*. The mastic composition furthermore regains its viscous behaviour as indicated by a distinct increase of the phase lag, δ. These changes indicate that the mastic composition becomes less brittle which is beneficial for road performance. Furthermore the increase in phase lag shows that the mastic composition regains its original relaxation behaviour. This implies that a build-up of stress due to temperature variations is prevented. Again this is beneficial for road performance

## Claims

1. Mastic composition consisting substantially of a bituminous binder material comprising recycle bitumen and granular asphalt aggregates with a diameter of at most 2 mm, wherein the granular asphalt aggregates consist for a proportion of at least 50 %wt, based on the weight of the aggregates, of reclaimed granular asphalt aggregates that have a diameter of at most 2 mm, and wherein the reclaimed granular asphalt aggregates comprise recycle bitumen ranging from 6 to 25 %wt, based on the weight of the reclaimed granular asphalt aggregates, and wherein the amount of bituminous binder material is at least 15%wt, based on the weight of the bituminous binder material and the granular asphalt aggregates.

2. Mastic composition according to claim 1, wherein the reclaimed granular asphalt aggregates have a maximum diameter of at most 1 mm.

3. Mastic composition according to claim 1 or claim 2, wherein the amount of bituminous binder material ranges from 25 to 75 %wt, based on the amount of bituminous binder material and granular asphalt aggregates.

4. Mastic composition according to any one of claims 1 to 3, wherein the proportion of the reclaimed granular asphalt aggregates having a maximum diameter of at most 2 mm is at least 90 %wt, preferably at least 95%wt, based on the weight of the granular asphalt aggregates in the mastic composition.

5. Mastic composition according to any one of claims 1 to 4, which has a shear modulus of at most 2000 MPa, as determined by Dynamic Shear Rheometry at -10°C and a frequency of 1 Hz.

6. Mastic composition according to any one of claims 1 to 5, wherein the reclaimed granular asphalt aggregates have been obtained by subjecting reclaimed asphalt to decomposition in a centrifugal mill and subsequent sieving, and wherein preferably the reclaimed granular asphalt aggregates comprise recycle bitumen ranging from 7 to 25 %wt, more preferably from 9 to 25%, based on the weight of the reclaimed granular asphalt aggregates .

7. Mastic composition according to any one of claims 1 to 5, which further comprises a rejuvenating agent.

8. Mastic composition according to claim 7, wherein the rejuvenating agent is selected from the group consisting of a crude oil fraction, animal oil, vegetable oil and mixtures thereof.

9. Mastic composition according to claim 8, wherein the rejuvenating agent is a vegetable oil, preferably selected from soybean oil, sunflower oil, rapeseed oil, corn oil, peanut oil, olive oil, coconut oil, palm oil, palm kernel oil and mixtures thereof, more preferably palm oil or palm kernel oil.

10. Mastic composition according to any one of claims 7 to 9, wherein the amount of rejuvenating agent ranges from 0.5 to 5.0 %wt, based on the weight of the bituminous binder material.

11. Process for the preparation of a mastic composition, comprising
a) providing a solid material comprising reclaimed granular asphalt aggregates which have a maximum diameter of at most 2 mm, and and wherein the reclaimed granular asphalt aggregates comprise recycle bitumen ranging from 6 to 25 %wt, based on the weight of the reclaimed granular asphalt aggregates;
b) providing a fresh bitumen and, optionally, a rejuvenating agent;
c) mixing the solid material with the fresh bitumen to obtain a mixture containing reclaimed granular asphalt aggregates and a bituminous binder material consisting of recycle bitumen and fresh bitumen and optionally the rejuvenating agent; and
d) recovering the mixture as the mastic composition;
wherein the amount of bitumen ranges from 15 to 75 %wt, calculated as recycle bitumen, fresh bitumen and optionally the rejuvenating agent, and based on the weight of the mastic composition.

12. Process according to claim 11, wherein the reclaimed granular asphalt aggregates comprise recycle bitumen ranging from 7 to 25 %wt, preferably from 9 to 25%, based on the weight of the reclaimed granular asphalt aggregates.

13. Process according to claim 11 or 12, wherein the solid material has been obtained by subjecting reclaimed asphalt to decomposition in a centrifugal mill and subsequent sieving.

14. Process according to any one of claims 11 to 13, wherein the bitumen in the mixture of solid material and fresh bitumen, and optionally the rejuvenating agent, has been brought to the kinematic viscosity of at least 200 cSt by means of heating.

15. Process according to claim 14, wherein the mixture of fresh bitumen and solid material, and optionally the rejuvenating agent, has been heated to a temperature in the range of 130 to 200 °C.

16. Process according to any one of claims 11 to 15, wherein a rejuvenating agent is added to the mixture.

17. Process according to any one of claims 11 to 16, wherein a rejuvenating agent is added to the mixture in an amount ranging from 0.5 to 5.0 %wt, based on the weight of the bitumen fraction.

18. Process according to any one of claims 11 to 17, wherein the amount of bituminous binder material, calculated as recycle bitumen, fresh bitumen, and optionally the rejuvenating agent, ranges from 25 to 75 %wt based on the weight of the mastic composition.

19. Use of the mastic composition according to any one of claims 1 to 10 as binding agent in the manufacture of an asphalt mixture.

20. Process for the manufacture of an asphalt composition, comprising a mastic composition according to any one of claims 1 to 10 and coarse aggregates, in which process
the mastic composition according to any one of claims 1 to 10 is provided;
the mastic composition is heated to an elevated temperature and the thus heated mastic composition is passed to an expansion chamber;
water is passed to the expansion chamber to contact the heated mastic composition to form steam, thereby forming a foamed mastic composition; and
the foamed mastic composition is combined with the coarse aggregates, yielding an asphalt composition.

21. Solid material comprising reclaimed granular asphalt aggregates, which have a maximum diameter of at most 2 mm, and recycle bitumen, and wherein the amount of recycle bitumen in the solid material ranges from 6 to 25 %wt, preferably from 7 to 25 %wt, more preferably from 9 to 25 %wt, based on the weight of the solid material.

## Patentansprüche

1. Mastixzusammensetzung, die im Wesentlichen aus einem bituminösen Bindematerial besteht, das Recycling-Bitumen und körnige Asphaltzuschläge mit einem Durchmesser von höchstens 2 mm umfasst, wobei die körnigen Asphaltzuschläge für einen Anteil von mindestens 50 Gew.-% basierend auf dem Gewicht der Zuschläge aus wiederverwendeten granularen Asphaltzuschlägen bestehen, die einen Durchmesser von höchstens 2 mm aufweisen, und wobei die wiederverwendeten granularen Asphaltzuschläge Recycling-Bitumen basierend auf dem Gewicht der wiederverwendeten granularen Asphaltzuschläge von 6 bis 25 Gew.-% umfassen, und wobei die Menge an bituminösen Bindematerial basierend auf dem Gewicht des bituminösem Bindematerials und der granularen Asphaltzuschläge mindestens 15 Gew.-% beträgt.

2. Mastixzusammensetzung nach Anspruch 1, wobei die wiederverwendeten granularen Asphaltzuschläge einen maximalen Durchmesser von maximal 1 mm aufweisen.

3. Mastixzusammensetzung nach Anspruch 1 oder Anspruch 2, wobei die Menge an bituminösem Bindematerial basierend auf der Menge an bituminösen Bindematerial und granularen Asphaltzuschlägen 25 bis 75 Gew.-% beträgt.

4. Mastixzusammensetzung nach einem der Ansprüche 1 bis 3, wobei der Anteil an den wiederverwendeten granularen Asphaltzuschlägen, die einen maximalen Durchmesser von höchstens 2 mm aufweisen, basierend auf dem Gewicht der granularen Asphaltzuschläge in der Mastixzusammensetzung mindestens 90 Gew.-%, vorzugsweise mindestens 95 Gew.-% beträgt.

5. Mastixzusammensetzung nach einem der Ansprüche 1 bis 4, die ein Schermodul von höchstens 2000 MPa, wie durch Dynamic Shear Rheometry bei -10 °C und einer Frequenz von 1 Hz bestimmt, aufweist.

6. Mastixzusammensetzung nach einem der Ansprüche 1 bis 5, wobei die wiederverwendeten granularen Asphaltzuschläge erhalten wurden, indem wiederverwendeter Asphalt Zerlegung in einer Zentrifugalmühle und darauffolgender Siebung unterworfen wurde, und wobei vorzugsweise die wiederverwendeten granularen Asphaltzuschläge Recycling-Bitumen in einem Bereich von 7 bis 25 Gew.-%, bevorzugter 9 bis 25 Gew.-% basierend auf dem Gewicht der wiederverwendeten granularen Asphaltzuschläge umfassen.

7. Mastixzusammensetzung nach einem der Ansprüche 1 bis 5, die weiter ein Regenerierungsmittel umfasst.

8. Mastixzusammensetzung nach Anspruch 7, wobei das Regenerierungsmittel aus der Gruppe ausgewählt ist, die aus einer Rohölfraktion, tierischem Öl, Pflanzenöl und Gemischen davon besteht.

9. Mastixzusammensetzung nach Anspruch 8, wobei das Regenerierungsmittel ein Pflanzenöl ist, das vorzugsweise aus Sojabohnenöl, Sonnenblumenöl, Rapsöl, Maisöl, Erdnussöl, Olivenöl, Kokosöl, Palmöl, Palmkernöl und Gemischen davon, bevorzugter aus Palmöl oder Palmkernöl ausgewählt ist.

10. Mastixzusammensetzung nach einem der Ansprüche 7 bis 9, wobei die Menge an Regenerierungsmittel basierend auf dem Gewicht des bituminösen Bindematerials 0,5 bis 5,0 Gew.-% beträgt.

11. Verfahren für die Zubereitung einer Mastixzusammensetzung, das Folgendes umfasst
a) Bereitstellen eines Feststoffs, der wiederverwendete granulare Asphaltzuschläge umfasst, die einen maximalen Durchmesser von höchstens 2 mm aufweisen, und wobei die wiederverwendeten granularen Asphaltzuschläge Recycling-Bitumen basierend auf dem Gewicht der wiederverwendeten granularen Asphaltzuschläge 6 bis 25 Gew.-% umfassen;
b) Bereitstellen eines frischen Bitumens und, optional, eines Regenerierungsmittels;
c) Mischen des Feststoffs mit dem frischen Bitumen, um ein Gemisch zu erhalten, das wiederverwendete granularen Asphaltzuschläge und ein bituminösen Bindematerial enthält, das aus Recycling-Bitumen und frischem Bitumen und optional dem Regenerierungsmittel besteht; und
d) Rückgewinnen des Gemisch als die Mastixzusammensetzung;
wobei die Menge an Bitumen von 15 bis 75 Gew.-% berechnet als Recycling-Bitumen, frisches Bitumen und optional das Regenerierungsmittel und basierend auf dem Gewicht der Mastixzusammensetzung beträgt.

12. Verfahren nach Anspruch 11, wobei die wiederverwendeten granularen Asphaltzuschläge Recycling-Bitumen basierend auf dem Gewicht der wiederverwendeten granularen Asphaltzuschläge von 7 bis 25 Gew.-%, vorzugsweise von 9 bis 25 Gew.-% umfassen.

13. Verfahren nach Anspruch 11 oder 12, wobei der Feststoff erhalten wurde, indem wiederverwendeter Asphalt Zerlegung in einer Zentrifugalmühle und darauffolgender Siebung unterworfen wurde.

14. Verfahren nach einem der Ansprüche 11 bis 13, wobei das Bitumen in dem Gemisch aus Feststoff und frischem Bitumen und optional dem Regenerierungsmittel durch Erhitzen auf die kinematische Viskosität von mindestens 200 cSt gebracht wurde.

15. Verfahren nach Anspruch 14, wobei das Gemisch aus frischem Bitumen und Feststoff und optional dem Regenerierungsmittel auf eine Temperatur in dem Bereich von 130 bis 200 °C erhitzt wurde.

16. Verfahren nach einem der Ansprüche 11 bis 15, wobei ein Regenerierungsmittel zu dem Gemisch hinzugefügt wird.

17. Verfahren nach einem der Ansprüche 11 bis 16, wobei ein Regenerierungsmittel zu dem Gemisch basierend auf dem Gewicht der Bitumenfraktion in einer Menge von 0,5 bis 5,0 Gew.-% hinzugefügt wird.

18. Verfahren nach einem der Ansprüche 11 bis 17, wobei die Menge an bituminösem Bindematerial, die als Recycling-Bitumen, frisches Bitumen und optional dem Regenerierungsmittel berechnet wird, basierend auf dem Gewicht der Mastixzusammensetzung 25 bis 75 Gew.-% beträgt.

19. Verwendung der Mastixzusammensetzung nach einem der Ansprüche 1 bis 10 als Bindemittel bei der Herstellung eines Asphaltgemischs.

20. Verfahren für die Herstellung einer Asphaltzusammensetzung, die eine Mastixzusammensetzung nach einem der Ansprüche 1 bis 10 und grobe Zuschläge umfasst, bei dem
die Mastixzusammensetzung nach einem der Ansprüche 1 bis 10 bereitgestellt wird;
die Mastixzusammensetzung auf eine erhöhte Temperatur erhitzt wird, und daher die erhitzte Mastixzusammensetzung zu einer Expansionskammer geleitet wird;
Wasser zu der Expansionskammer geleitet wird, um die erhitzte Mastixzusammensetzung zu kontaktieren, um Dampf zu bilden, wodurch eine aufgeschäumte Mastixzusammensetzung gebildet wird; und
die aufgeschäumte Mastixzusammensetzung mit den groben Zuschlägen kombiniert wird, was eine Asphaltzusammensetzung ergibt.

21. Feststoff, der wiederverwendete granulare Asphaltzuschläge umfasst, die einen maximalen Durchmesser von höchstens 2 mm aufweisen, und Recycling-Bitumen, und wobei die Menge an Recycling-Bitumen in dem Feststoff basierend auf dem Gewicht des Feststoffs 6 bis 25 Gew.-%, vorzugsweise 7 bis 25 Gew.-%, noch bevorzugter 9 bis 25 Gew.-% beträgt.

## Revendications

1. Composition de mastic constituée essentiellement d'un matériau liant bitumineux comprenant du bitume recyclé et des agrégats d'asphalte granulaires ayant un diamètre d'au plus 2 mm, dans laquelle les agrégats d'asphalte granulaires sont constitués, pour une proportion d'au moins 50% en poids sur la base du poids des agrégats, d'agrégats d'asphalte granulaire récupérés qui ont un diamètre d'au plus 2 mm, et dans laquelle les agrégats d'asphalte granulaire récupérés comprennent le bitume recyclé dans une plage allant de 6% à 25% en poids, sur la base du poids des agrégats d'asphalte granulaire, et dans laquelle la quantité de matériau liant bitumineux est d'au moins 15% en poids, sur la base du poids du matériau liant bitumineux et des agrégats d'asphalte granulaire.

2. La composition de mastic selon la revendication 1, dans laquelle les agrégats d'asphalte granulaire récupéré ont un diamètre maximal d'au plus 1 mm.

3. La composition de mastic selon la revendication 1 ou la revendication 2, dans laquelle la quantité de matériau liant bitumineux est comprise dans la plage allant de 25% à 75% en poids, sur la base de la quantité de matériau liant bitumineux et d'agrégats d'asphalte granulaire.

4. La composition de mastic selon l'une quelconque des revendications 1 à 3, dans laquelle la proportion des agrégats d'asphalte granulaire récupéré ayant un diamètre maximal d'au plus 2 mm est d'au moins 90% en poids, préférablement d'au moins 95% en poids, sur la base du poids des agrégats d'asphalte granulaire dans la composition de mastic.

5. La composition de mastic selon l'une quelconque des revendications 1 à 4, qui a un module de cisaillement d'au plus 2000 MPa, tel que déterminé par la rhéométrie de cisaillement dynamique à -10°C et à une fréquence de 1 Hz.

6. La composition de mastic selon l'une quelconque des revendications 1 à 5, dans laquelle les agrégats d'asphalte granulaire récupéré ont été obtenus en soumettant de l'asphalte récupéré à une décomposition dans un broyeur centrifuge et à un tamisage ultérieur, et dans laquelle, préférablement, les agrégats d'asphalte granulaire récupéré comprennent du bitume recyclé dans une plage allant de 7% à 25 %, plus préférablement de 9% à 25%, sur la base du poids des agrégats d'asphalte granulaire récupéré.

7. La composition de mastic selon l'une quelconque des revendications 1 à 5, qui comprend en outre un agent rajeunissant.

8. La composition de mastic selon la revendication 7, dans laquelle l'agent rajeunissant est choisi dans le groupe constitué d'une fraction de pétrole brut, d'huile animale, d'huile végétale et de leurs mélanges.

9. La composition de mastic selon la revendication 8, dans laquelle l'agent rajeunissant est une huile végétale, préférablement choisie parmi de l'huile de soja, de l'huile de tournesol, de l'huile de colza, de l'huile de maïs, de l'huile d'arachide, de l'huile d'olive, de l'huile de noix de coco, de l'huile de palme, de l'huile de palmiste et leurs mélanges, plus préférablement de l'huile de palme ou de l'huile de palmiste.

10. La composition de mastic selon l'une quelconque des revendications 7 à 9, dans laquelle la quantité d'agent rajeunissant se situe dans la plage allant de 0,5% à 5,0% en poids, sur la base du poids du matériau liant bitumineux.

11. Procédé pour la préparation d'une composition de mastic, comprenant les étapes de
a) fournir un matériau solide comprenant des agrégats d'asphalte granulaire récupéré qui ont un diamètre maximal d'au plus 2 mm, et dans lequel les agrégats d'asphalte granulaire récupéré comprennent du bitume recyclé dans une plage allant de 6% à 25%, sur la base du poids des agrégats d'asphalte granulaire récupéré ;
b) fournir un bitume frais et, éventuellement, un agent rajeunissant;
c) mélanger le matériau solide avec le bitume frais pour obtenir un mélange contenant des agrégats d'asphalte granulaire récupéré et un matériau liant bitumineux constitué de bitume recyclé et de bitume frais et éventuellement de l'agent de rajeunissement; et
d) récupérer le mélange en tant que la composition de mastic, dans lequel la quantité de bitume se situe dans la plage allant de 15% à 75% en poids, calculée en tant que bitume recyclé, bitume frais et éventuellement agent de rajeunissement, et sur la base du poids de la composition de mastic.

12. Le procédé selon la revendication 11, dans lequel la quantité de bitume recyclé dans le matériau solide se situe dans la plage allant de 7 à 25% en poids, préférentiellement de 9% à 25%, sur la base du poids des agrégats d'asphalte granulaire récupéré.

13. Le procédé selon la revendication 11 ou 12, dans lequel le matériau solide a été obtenu en soumettant de l'asphalte récupéré à une décomposition dans un broyeur centrifuge et à un tamisage ultérieur.

14. Le procédé selon l'une quelconque des revendications 11 à 13, dans lequel le bitume dans le mélange de matériau solide et de bitume frais, et éventuellement de l'agent rajeunissant, a été porté à une viscosité cinématique d'au moins 200 cSt par chauffage.

15. Le procédé selon la revendication 14, dans lequel le mélange de bitume frais et de matière solide, et éventuellement de l'agent de rajeunissement, a été chauffé à une température située dans la plage allant de 130°C à 200°C.

16. Procédé selon l'une quelconque des revendications 11 à 15, dans lequel un agent rajeunissant est ajouté au mélange.

17. Le procédé selon l'une quelconque des revendications 11 à 16, dans lequel un agent rajeunissant est ajouté au mélange dans une quantité se situant dans la plage allant de 0,5% à 5,0% en poids, sur la base du poids de la fraction de bitume.

18. Le procédé selon l'une quelconque des revendications 11 à 17, dans lequel la quantité de matériau liant bitumineux, calculée en tant que bitume recyclé, bitume frais et éventuellement agent rajeunissant, se situe dans la plage allant de 25% à 75% en poids sur la base du poids de la composition de mastic.

19. Utilisation de la composition de mastic selon l'une quelconque des revendications 1 à 10 comme agent liant dans la fabrication d'un mélange d'asphalte.

20. Procédé de fabrication d'une composition d'asphalte, comprenant une composition de mastic selon l'une quelconque des revendications 1 à 10 et des agrégats grossiers, procédé dans lequel
la composition de mastic selon l'une quelconque des revendications 1 à 10 est fournie;
la composition de mastic est chauffée à une température élevée et la composition de mastic ainsi chauffée est passée dans une chambre d'expansion;
de l'eau est passée dans la chambre d'expansion pour entrer en contact avec la composition de mastic chauffée pour former de la vapeur, formant ainsi une composition de mastic moussée; et
la composition de mastic moussé est combinée aux agrégats grossiers, conduisant à une composition d'asphalte.

21. Matériau solide comprenant des agrégats d'asphalte granulaire récupéré, qui ont un diamètre maximal d'au plus 2 mm, et de bitume recyclé, et dans lequel la quantité de bitume recyclé dans le matériau solide se situe dans la plage allant de 6% à 25% en poids, préférablement de 7% à 25% en poids, plus préférablement de 9% à 25% en poids, sur la base du poids du matériau solide.
